(19) Europäisches Patentamt
European Patent Office
Office européen des brevets

(11) EP 2 722 348 A1

(12) # EUROPEAN PATENT APPLICATION

(43) Date of publication:
**23.04.2014 Bulletin 2014/17**

(21) Application number: **12188634.5**

(22) Date of filing: **16.10.2012**

(51) Int Cl.:
***C08F 210/06*** *(2006.01)* ***C08F 4/651*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basell Poliolefine Italia S.r.l.
20127 Milano (IT)**

(72) Inventors:
- **Galvan, Monica
45030 S.Maria Maddalena (RO) (IT)**
- **Neumann, Andreas
44121 Ferrara (IT)**
- **Caputo, Tiziana
44121 Ferrara (IT)**
- **Squarzoni, Stefano
40015 Galliera (BO) (IT)**
- **Mazzucco, Antonio
44121 Ferrara (IT)**
- **Fusco, Ofelia
44123 Ferrara (IT)**
- **Gaddi, Benedetta
44122 Ferrara (IT)**
- **Collina, Gianni
44123 Ferrara (IT)**

(74) Representative: **Colucci, Giuseppe
Basell Poliolefine Italia S.r.l.
Intellectual Property
Piazzale G. Donegani 12
44122 Ferrara (IT)**

(54) **PROCESS FOR THE PREPARATION OF PROPYLENE RANDOM COPOLYMERS**

(57) A process for the preparation of random copolymer of propylene containing up to 6.0 % by weight of ethylene units, suitable for the manufacture of pipes, by copolymerizing propylene and ethylene in the presence of a catalyst system comprising the product obtained by contacting the following components:
(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) n aluminum hydrocarbyl compound, and
(c) optionally an external electron donor compound.



Printed by Jouve, 75001 PARIS (FR)

**Description**

The present invention relates to a process for the preparation of propylene random copolymers, to the polymers obtainable thereby and to their use for making pipe systems.

In pressure pipes, the transported fluid may have varying temperatures, usually within the range of about 0 °C to about 70 °C. Such pipes are typically made of polyolefin, usually polyethylene or polypropylene. The temperatures in e.g. a hot water pipe, typically used for plumbing and heating purposes, range from 30°C to 70°C which means that the pipe must be able to withstand a higher temperature than that for a secure long term use. The good thermal resistance of polypropylene compared with other polyolefins is particularly useful for applications such as hot water pipes as mentioned above.

A further problem of pipes obtained by polymer materials is the handling. During handling, pipes could be accidentally damaged. For this reason high (Izod) impact strength is required. Propylene random copolymers (PP-R) have been in use for pipe production since early 1990s and, over the past years, production of PP-R pipes has increased based on factor such as the pipe's strength, durability, joint integrity and long term cost effectiveness.

US6362298, for instance, discloses high-molecular-weight copolymers of propylene with 1 to 10% by weight of ethylene and their use for making pipes. The pipes made with those copolymers are reported to be endowed with low brittleness and a smooth surface and in addition high toughness and good rigidity in combination with excellent creep rupture strength.

Materials exhibiting improved properties, particularly meliorated Izod impact strength, would still be desirable. Therefore, the present invention sets out to provide novel propylene random copolymers for use in pipe systems. It has been found that those and other results can be achieved by using a polypropylene obtained by using a specific class of Ziegler/Natta catalysts.

Thus, according to a first aspect, the present invention provides a process for the preparation of random copolymer of propylene containing up to 6.0 % by weight of ethylene units, comprising the step ofcopolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

In the solid catalyst component (a) the succinate is preferably selected from succinates of formula (I) below:

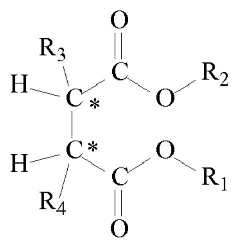

(I)

in which the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, $C_3$-$C_{20}$ cycloalkyl, $C_5$-$C_{20}$ aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)
$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

Particularly preferred are the compounds in which the $R_3$ and/or $R_4$ radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl

2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II)

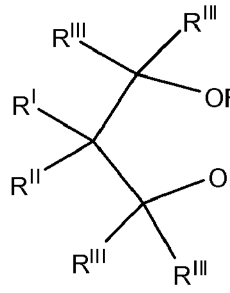

(II)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

Preferably, $R^{IV}$ is a 1-6 carbon atom alkyl radical and more particularly a methyl while the $R^{III}$ radicals are preferably hydrogen. Moreover, when $R^I$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^I$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^I$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-ffuorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III)

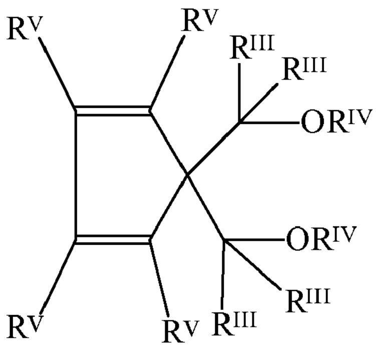

(III)

where the radicals $R^{IV}$ have the same meaning explained above and the radicals $R^{III}$ and $R^{V}$ radicals, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals and two or more of the $R^{V}$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkaryl and $C_7$-$C_{20}$ aralkyl radicals; said radicals $R^{V}$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Specially preferred are the compounds of formula (IV):

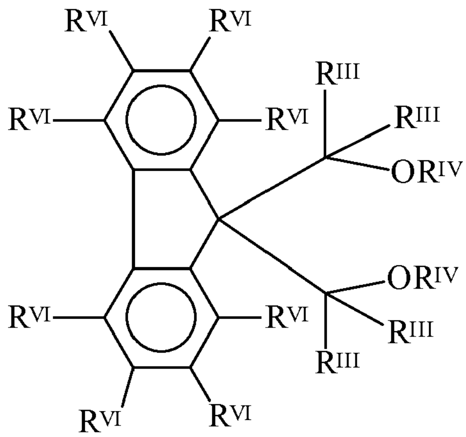

(IV)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ aralkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (II).

Specific examples of compounds comprised in formulae (II) and (III) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;

1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 μm, more preferably from 20 to 70 μm and even more preferably from 25 to 65 μm. As explained the succinate is present in an amount ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metildimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane,

n-hexane or n-heptane, at a temperature below about 60°C and preferably from about 0 to 30°C for a time period of from about 6 seconds to 60 minutes.

The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 10 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is discharged from the pre-polymerization reactor and fed to a gas-phase or liquid-phase polymerization reactor. In case of a gas-phase reactor, it generally consists of a fluidized or stirred, fixed bed reactor or a reactor comprising two interconnected polymerization zones one of which, working under fast fluidization conditions and the other in which the polymer flows under the action of gravity. The liquid phase process can be either in slurry, solution or bulk (liquid monomer). This latter technology can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Hydrogen can be used as a molecular weight regulator.

According to another aspect, the present invention provides a random copolymer of propylene containing up to 6.0 % by weight of ethylene units, obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

The copolymers of the present invention contain preferably from 0.5 to 5.5 % by weight, more preferably from 2.0 to 5.0 % by weight, even more preferably from 3.8_to 4.8 % by weight of ethylene units.

The copolymers of the present invention have the following preferred features:

- melt flow rate (MFR) values according to ISO 1133 (230°C, 5 Kg) generally ranging from 0.01 to 5 g/10min, preferably from 0.5 to 2.5 g/10min, more preferably from 0.9 to 1.5 g/10min;;
- an amount of xylene soluble generally lower than 12.0 %, preferably lower than 10.0 %, more preferably lower than 9.0 %;
- a rheological polydispersity index (PI) generally ranging from 3.0 to 10.0, preferably from 3.5 to 6.0, more preferably from 4.0 to 5.0.

The copolymers of the present invention have the additional advantage that the pipe systems produced therefrom do not contain phthalate residues.

The copolymers of the present invention can also contain additives commonly employed in the art, such as antioxidants, light stabilizers, heat stabilizers, nucleating agents, colorants and fillers. Particularly, they can comprise an inorganic filler agent in an amount ranging from 0.5 to 60 parts by weight with respect to 100 parts by weight of the said heterophasic polyolefin composition. Typical examples of such filler agents are calcium carbonate, barium sulphate, titanium bioxide and talc. Talc and calcium carbonate are preferred. A number of filler agents can also have a nucleating effect, such as talc that is also a nucleating agent. The amount of a nucleating agent is typically from 0.5 to 5 wt% with respect to the polymer amount.

According to a further aspect, the present invention provides the use of the random copolymer of propylene described above for the manufacture of pipe systems.

According to a still further aspect, the present invention provides a pipe system comprising the random copolymer of propylene described above.

The pipe systems according to the present invention are particularly suitable for pressure pipe application.

The term "pipe system" as used herein includes pipe fittings, tubing, valves and all parts which are commonly necessary for e.g. a hot water piping system. Also included within the definition are single and multilayer pipes, where for example one or more of the layers is a metal layer and which may include an adhesive layer.

Such articles can be manufactured through a variety of industrial processes well known in the art, such as for instance moulding, extrusion, and the like.

The following examples are given to illustrate the present invention without any limiting purpose.

**EXAMPLES**

**Methods**

The characterization data for the propylene polymers and for the obtained films were obtained according to the following methods:

Ethylene content (C2)

Determined by IR spectroscopy. The comonomer content of the ethylene copolymer fraction is determined on the precipitated "amorphous" fraction of the polymer. The precipitated "amorphous" fraction is obtained as follows: to one 100 ml aliquot of the filtered liquid obtained as described above 200 ml of acetone are added under vigorous stirring. Precipitation must be complete as evidenced by a clear solid-solution separation. The solid thus obtained is filtered on a metallic screen and dried in a vacuum oven at 70°C until a constant weight is reached.

Melt flow rate (MFR)

Determined according to ISO 1133 (230°C, 5 Kg).

Polydispersity Index (PI)

Determined according to ISO 6721-10 method. PI is calculated by way of a dynamic test carried out with a RMS-800 rheometric mechanical spectrometer. The PI is defined by the equation:

$$PI=105/Gc,$$

where the Gc (crossover modulus) value is the one where G' (storage modulus) coincides with G" (loss modulus). A sample is prepared with one gram of polymer, said sample having a thickness of 3 mm and a diameter of 25 mm; it is then placed in the above mentioned apparatus and the temperature is then gradually increased until it reaches a temperature of 200 C after 90 minutes. At this temperature one carries out the test where G' and G" are measured in function of the frequency.

Xylene Solubles (XS)

Determined as follows: 2.5 g of polymer and 250 ml of xylene are introduced in a glass flask equipped with a refrigerator and a magnetical stirrer. The temperature is raised in 30 minutes up t the boiling pint of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Flexural modulus 24 h (MEF)

Determined according to ISO 178.

IZOD Impact Strength

Determined according to ISO 180/1A.

DBTT (ductile to brittle transition temperature)

Measured via a biaxial impact test by means of an impact tester equipped with the following features:

- Load cell with natural frequency equal to or greater than 15,000 Hz
- Capability to impact with a nominal energy of 16J approx (5.3Kg mass * 30cm falling height)
- Hemispheric impactor 1/2" diameter
- Specimen support 38mm diameter
- Capability to integrate Force/Time curve

DBTT Test description:

Ten (10) 1.55*38mm injection molded specimens are impacted at several different temperatures in order to find the 3 temperatures at which a ratio of 20-80%, 40-60%, 80-20%, respectively, of Brittle/Ductile failures occurs.

As Brittle failure is intended a failure absorbing a total energy equal to or lower than 2 Joules. The best interpolation curve is then traced between those 3 temperatures. The temperature where the event of 50% Brittle and 50% Ductile failures occurs is intended to represent the DBTT.

Melting Temperature (Tm) and Crystallization Temperature (Tc)

Determined by differential scanning calorimetry (DSC). Weighting 6 □1 mg, is heated to 220 □1° C at a rate of 20 °C/min and kept at 220 □1° C for 2 minutes in nitrogen stream and it is thereafter cooled at a rate of 20° C/min to 40 □2° C, thereby kept at this temperature for 2 min to crystallise the sample. Then, the sample is again fused at a temperature rise rate of 20° C/min up to 220° C □1. The second melting scan is recorded, a thermogram is obtained, and, from this, temperatures corresponding to peaks are read.

**Example 1**

Preparation of the solid catalyst component

Into a 500 mL four-necked round flask, purged with nitrogen, 250 mL of $TiCl_4$ were introduced at 0°C. While stirring, 10.0 g of microspheroidal $MgCl_2 \cdot 2.1C_2H_5OH$ having average particle size of 47μm (prepared in accordance with the method described in example 1 of EP728769, an amount of diethyl 2,3-diisopropylsuccinate such as to have a Mg/succinate molar ratio of 15 was added. The temperature was raised to 100°C and kept at this value for 60 min. After that the stirring was stopped, the liquid was siphoned off. After siphoning, fresh $TiCl_4$ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh TiCl4 was added. Then the temperature was raised to 90°C for 15min. After sedimentation and siphoning at 90°C the solid was washed six times with anhydrous hexane (6 x 100 ml) at 60 °C.

Preparation of the catalyst system

Before introducing it into the polymerization reactors, the solid catalyst component described above was contacted with aluminum-triethyl (TEAL) and dicyclopentyl-dimethoxysilane (DCPMS) at a temperature of 15°C under the conditions reported in Table 1.

Prepolymerization

The catalyst system was then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator.
The main polymerization conditions are reported in Table 1. The analytical data relating to the polymers produced are reported in Table 2.

Pelletization

The polymer particles exiting from the second polymerization step were subjected to a steam treatment to remove the unreacted monomers and dried.
Then they were added with the following additives:

- talc - 0.2 % by weight;
- calcium stearate, - 0.05 % by weight;
- Irgafos® 168 (supplied by Ciba, now part of BASF) - 0.15 % by weight;
- Irganox® 1010 (supplied by Ciba, now part of BASF) - 0.3 % by weight.

Thereafter they were extruded in a twin-screw extruder Berstorff (L/D=33) under the following operating conditions:

Flow rate: 50 Kg/h
Rotational speed: 220 rpm
Temperature of the feeding section: 80°C
Temperature of the melting section: 220°C
Temperature of the die section: 230°C
Melt temperature: 260°C

The data relating to the characterization of the obtained pellets are reported in Table 3.

**Example 2**

Example 1 was repeated except that, in order to differentiate the hydrogen concentration between the riser and the downcomer, a gas stream (barrier feed) was fed to the reactor as described in European Patent EP1012195. The main polymerization conditions are reported in Table 1. The analytical data relating to the polymers produced are reported in Table 2. The data relating to the characterization of the pellets are reported in Table 3.

**Example 3**

Preparation of the solid catalyst component

Into a 500 mL four-necked round flask, purged with nitrogen, 250 mL of $TiCl_4$ were introduced at 0°C. While stirring, 10.0 g of microspheroidal Mg $Cl_2 \cdot 2.1C_2H_5OH$ having average particle size of 47μm (prepared in accordance with the method described in example 1 of EP728769, an amount of diethyl 2,3-diisopropylsuccinate such as to have a Mg/succinate molar ratio of 24 was added. The temperature was raised to 110°C and kept at this value for 60 min. After that the stirring was stopped, the liquid was siphoned off. After siphoning, fresh $TiCl_4$ and an amount of 9,9-bis(methoxymethyl)fluorene such as to have a Mg/diether molar ratio of 12 were added. Then the temperature was raised to 100°C and kept for 30 minutes under stirring. After sedimentation and siphoning at 75°C, fresh TiCl4 was added. Then the temperature was raised to 90°C for 15min. After sedimentation and siphoning at 75°C the solid was washed six times with anhydrous hexane (6 x 100 ml) at 60 °C.
With the thus obtained solid catalyst component a catalyst system was prepared that was then subjected to prepolymerization and thereafter used in polymerization, all according to the procedure described in example 2.

The main polymerization conditions are reported in Table 1. The analytical data relating to the polymers produced are reported in Table 2.

**Example 4 (comparative)**

A propylene random copolymer was prepared from a phthalate-containing Ziegler-Natta catalyst prepared according to the Example 5, lines 48-55, of EP728769. The main polymerization conditions are reported in Table 1. The analytical data relating to the polymers produced are reported in Table 2. The data relating to the characterization of the pellets are reported in Table 3.

Table 1 - Polymerization conditions

| | | **Ex.1** | **Ex.2** | **Ex.3** | **Ex.4 (Comp.)** |
|---|---|---|---|---|---|
| TEAL/external donor | wt/wt | 6 | 5 | 4 | 4 |
| TEAL/catalyst | wt/wt | 9 | 8 | 7 | 4 |
| Temperature | °C | 73 | 73 | 73 | 73 |
| Pressure | bar-g | 28 | 28 | 28 | 28 |
| C2/(C3+C2) riser | mol/mol | 0.026 | 0.025 | 0.027 | 0.021 |
| C2/(C3+C2) downcomer | mol/mol | 0.010 | 0.013 | 0.024 | 0.019 |
| H2/C3 riser | mol/mol | 0.003 | 0.009 | 0.028 | 0.007 |
| H2 downcomer (*) | ppm | - | 320 | 570 | 260 |

(*) if different from the riser
C2 = ethylene; C3 = propylene; H2 = hydrogen

Table 2 - Polymer characteristics

| | | **Ex.1** | **Ex.2** | **Ex.3** | **Ex.4 (Comp.)** |
|---|---|---|---|---|---|
| Ethylene content | %wt | 4.0 | 4.1 | 4.3 | 4.0 |
| MFR (230°C/5kg) | g/10' | 1.0 | 0.9 | 1.1 | 1.2 |
| PI | | 4.9 | 4.0 | 5.0 | 5.0 |
| XS | % | 8.6 | 8.7 | 7.8 | 8.7 |

Table 3 - Pellets characterization

| | | **Ex.1** | **Ex.2** | **Ex.3** | **Ex.4 (Comp.)** |
|---|---|---|---|---|---|
| MEF 24h | MPa | 780 | 840 | 780 | 870 |
| IZOD 0°C 24h | $kJ/m^2$ | 23.6 | 18.8 | 24.0 | 17.7 |
| DB/TT | °C | 1.9 | 2.5 | 1.0 | 4.6 |
| Tm | °C | 139.9 | 139.3 | 138.1 | 140.2 |
| Tc | °C | 96.3 | 96.2 | 95.7 | 98.3 |

Data reported in table 3 show that the polymers of the invention are endowed with improved impact (Izod and DB/TT) while maintaining good rigidity (MEF).

## Claims

**1.** A process for the preparation of random copolymer of propylene containing up to 6.0 % by weight of ethylene units, comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) n aluminum hydrocarbyl compound, and
(c) optionally an external electron donor compound.

**2.** The process according to claim 1, wherein the succinate is of formula (I):

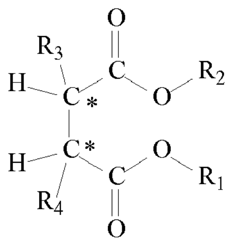

(I)

wherein the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S).

**3.** The process according to any of claims 1 or 2, wherein the 1,3-diether is of formula (I):

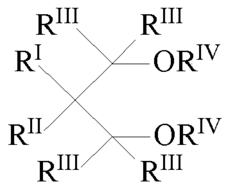

(I)

wherein $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

**4.** The process according to any of claims 1 to 3, wherein the catalyst component (a) has an average particle size ranging from 15 to 80 μm.

**5.** The process according to any of claims 1 to 4, wherein the succinate is present in amount ranging from 40 to 90% by mol with respect to the total amount of internal donors.

**6.** A random copolymer of propylene containing up to 6.0 % by weight of ethylene units, obtainable by a process comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

**7.** Use of the random copolymer of propylene according to claim 6 for the manufacture of pipe systems.

**8.** A pipe system comprising the random copolymer of propylene according to claim 6.

Europäisches Patentamt
European Patent Office
Office européen des brevets

# EUROPEAN SEARCH REPORT

Application Number
EP 12 18 8634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>Y | WO 2010/146074 A1 (BASELL POLIOLEFINE SRL [IT]; COLLINA GIANNI [IT]; CIARAFONI MARCO [IT]) 23 December 2010 (2010-12-23)<br>* examples *<br>* table 1 *<br>----- | 1-6<br><br><br>7,8 | INV.<br>C08F210/06<br>C08F4/651 |
| Y | DATABASE CA [Online]<br>CHEMICAL ABSTRACTS SERVICE, COLUMBUS, OHIO, US;<br>2009,<br>CHENG, WEISHU: "Study on process for polypropylene random copolymer resin for pipes",<br>XP002689114,<br>retrieved from STN<br>Database accession no. 2010:263899<br>* abstract *<br>& CHENG, WEISHU: "Study on process for polypropylene random copolymer resin for pipes",<br>HECHENG SHUZHI JI SULIAO , 26(6), 35-38<br>CODEN: HSSUEJ; ISSN: 1002-1396,<br>2009, XP8158779,<br>* the whole document *<br>----- | 7,8 | TECHNICAL FIELDS SEARCHED (IPC)<br>C08F |
| A | WO 2007/147865 A2 (TOTAL PETROCHEMICALS RES FELUY [BE]; STANDAERT ALAIN [BE]; GROMADA JER) 27 December 2007 (2007-12-27)<br>* page 8, line 21 - line 30 *<br>* claims *<br>----- | 1-8 | |
| A | WO 2011/076371 A1 (BASELL POLYOLEFINE GMBH [DE]; MEIER GERHARDUS [DE]; AULBACH MICHAEL [D) 30 June 2011 (2011-06-30)<br>* claims; figure 1 *<br>-----<br>-/-- | 1-8 | |

The present search report has been drawn up for all claims

1

| Place of search | Date of completion of the search | Examiner |
|---|---|---|
| The Hague | 21 March 2013 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 18 8634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/061134 A1 (BASELL POLIOLEFINE SRL [IT]; COLLINA GIANNI [IT]; CIARAFONI MARCO [IT]) 26 May 2011 (2011-05-26)<br>* examples; table 1 *<br>----- | 1-6 | |
| E | WO 2012/139897 A1 (BASELL POLIOLEFINE SRL [IT]; GUIDOTTI SIMONA [IT]; MORINI GIAMPIERO [I) 18 October 2012 (2012-10-18)<br>* tables 1,5 *<br>----- | 1-8 | |

TECHNICAL FIELDS SEARCHED (IPC)

The present search report has been drawn up for all claims

1

| Place of search | Date of completion of the search | Examiner |
|---|---|---|
| The Hague | 21 March 2013 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 18 8634

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2013

| Patent document cited in search report | Publication date | Patent family member(s) | Publication date |
|---|---|---|---|
| WO 2010146074 A1 | 23-12-2010 | CN 102803310 A | 28-11-2012 |
| | | EP 2443159 A1 | 25-04-2012 |
| | | JP 2012530170 A | 29-11-2012 |
| | | KR 20120042763 A | 03-05-2012 |
| | | US 2012083576 A1 | 05-04-2012 |
| | | WO 2010146074 A1 | 23-12-2010 |
| WO 2007147865 A2 | 27-12-2007 | CN 101472963 A | 01-07-2009 |
| | | EP 1849807 A1 | 31-10-2007 |
| | | EP 2029642 A2 | 04-03-2009 |
| | | JP 2009541516 A | 26-11-2009 |
| | | KR 20090031356 A | 25-03-2009 |
| | | US 2009326172 A1 | 31-12-2009 |
| | | WO 2007147865 A2 | 27-12-2007 |
| WO 2011076371 A1 | 30-06-2011 | CN 102656197 A | 05-09-2012 |
| | | EP 2516485 A1 | 31-10-2012 |
| | | KR 20120115273 A | 17-10-2012 |
| | | US 2012283396 A1 | 08-11-2012 |
| | | WO 2011076371 A1 | 30-06-2011 |
| WO 2011061134 A1 | 26-05-2011 | CN 102597022 A | 18-07-2012 |
| | | EP 2501727 A1 | 26-09-2012 |
| | | US 2012232221 A1 | 13-09-2012 |
| | | WO 2011061134 A1 | 26-05-2011 |
| WO 2012139897 A1 | 18-10-2012 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6362298 B
- US P4298718 A
- US P4495338 A
- EP 728769 A
- EP 782587 A
- EP 1012195 A